# EUROPEAN PATENT SPECIFICATION

(11) **EP 2 299 623 B1**
(45) Date of publication and mention of the grant of the patent: **24.05.2017**
(21) Application number: 10177683.9
(22) Date of filing: 20.09.2010
(51) Int. Cl.: H04L 5/00, H04B 7/04, H04W 72/04

(54) **Resource allocation in a cellular communications system**
Resourcenzuweisung in einem Mobilfunkkommunikationssystem
Allocation de ressources dans un système de télécommunication cellulaire

(43) Date of publication of application: 23.03.2011
(73) Proprietor: Vodafone Group PLC, Newbury Berkshire RG14 2FN (GB); Vodafone España, S.A.U., 28108 Alcobendas (ES)
(72) Inventor: De Pasquale, Andrea, E-28050, Madrid (ES); Exadaktylos, Kyriakos, E-28050, Madrid (ES); Alcazar Viguera, Esperanza, 28050, Madrid (ES); Diaz Mateos, Maria, 28050, Madrid (ES); Garriga Muñiz, Beatriz, E-28050, Madrid (ES); Dominguez Romero, Francisco, E-28050, Madrid (ES); McWilliams, Brendan, E-28050, Madrid (ES); Urbano Ruiz, Julio, E-28050, Madrid (ES); Serrano Solsana, Clara, E-28050, Madrid (ES); López Roman, Javier, E-28050, Madrid (ES); García Viñas, Aitor, E-28050, Madrid (ES); Tenorio Sanz, Santiago, E-28050, Madrid (ES); Le Pezennec, Yannick, E-28050, Madrid (ES)
(74) Representative: Boult Wade Tennant

(56) References cited:
- WO-A2-2008/033089
- GB-A- 2 414 365
- US-B1- 6 907 243

## Description

### Field of the Invention

The present invention is comprised within the field of mobile telecommunications. More specifically, it relates to a method and system of dynamically allocating carriers in a MIMO enabled mobile telecommunications network using diversity techniques and in particular UMTS systems supporting HDSPA protocol and MIMO techniques.

### Background of the Invention

HSDPA is a packet-based data service in the 3rd generation W-CDMA systems, which provides high-speed data transmission (up to 8-10 Mbps over a 5MHz bandwidth in the Release 6 of 3GPP) in CDMA to support multimedia services. This system is evolved from and backward compatible with Release 99 (Rel'99) WCDMA systems,

It is acknowledged that MIMO technology plays an important role in the evolution of HSDPA, mainly because it offers significant increases in downlink data rates (up to 28 Mbps at Physical layer). This is specified by the 3rd Generation Partnership Project (3GPP) and it is part of 3G mobile standard. In brief, MIMO technology is based on the usage of several antennas at both the transmitter and the receiver to improve communication performance and diversity techniques dividing information into two streams of bits to be transmitted and received by different antennas of Nodes B and UEs.

MIMO usually enables two parallel data flows at the same transmission (TX) power that are simultaneously transmitted in the downlink (DL). It thus requires two Power Amplifiers (PAs) transmitting in two independent channels and the availability of a diversity pilot. Therefore, each channel must have its own associated pilot to enable channel estimation and for an appropriate power control.

Once MIMO is activated in the system, an efficient usage of Radio resources requires that the PAs utilize the same amount of power even when non-MIMO traffic is present. For this reason MIMO introduction has always been associated and coupled with the activation of TX diversity techniques, namely TSTD and STTD and/or CLTD, to be applied and used for all the channels transmitted on a cell, i.e. to be used when transmitting data to existing Rel'99 and legacy HSDPA terminals. Such techniques guarantee the PAs to be balanced.

Among said diversity techniques, MIMO was particularly planned to be introduced with the use of STTD for seamless operation of all legacy services. STTD utilizes STBC (space-time block code) in order to exploit redundancy in multiply transmitted versions of a signal, that is, the two antennas transmit the same information but each one uses a different coding scheme. This is a mandatory requirement and therefore assumed to be supported by all terminals.

There are other possible approaches to grant power balancing. One way is the Virtual Antenna Mapping (VAM), which adaptively selects the number of antennas from which to transmit as well as selects the best subset of antennas for the selected transmission mode. VAM improves the balance of power from the two PAs in the low SNR (signal to noise ratio) region. This concept is specified in UTRA MIMO Extension 25.876, version 1.80.

Another way may be achieved by an inter-carrier load-balancing, a pseudo-balancing by ad-hoc traffic management. An additional carrier may be used (having available one carrier on the first PA and a second carrier on a second PA) paired with a load balancing between carriers.

MIMO transmits on 2 PAs, and therefore it needs pilot channels to enable the UE to do the channel estimation. In case of STTD, the Primary CPICH and the Diversity Primary CPICH are transmitted by each PA respectively. MIMO with Virtual Antenna Mapping does not require Diversity Primary CPICH but uses the S-CPICH (Secondary Common Pilot Channel) for the UE to do the channel estimation in the second transmission. This concept is described in 3GPP Rel'7 standard for MIMO implementation in WCDMA.

Summarizing, MIMO transmission needs the usage of two PAs and the availability of a 2 different pilots (one per each PA), which can be provided by the usage of either a Diversity CPICH (mostly with STTD transmission mode) or an S-CPICH (with Virtual Antenna mapping).

The above features need support in MIMO-enabled terminals and in the network as well. On the other hand, it is also important that MIMO terminals coexist with other terminals like Rel'99 and HSDPA terminals. Consequently, backward-compatibility is required.

Unexpectedly, the first trial measurements carried in field have shown an incompatibility of certain terminals. The problem occurs in connection with STTD activation, which significantly decreases, in both good and medium radio conditions, the performance of some categories of HSDPA terminals already in the market. Depending on the device and radio conditions, STTD was found to degrade data performance for legacy HSPA data devices up to 40%.

In particular, it was observed that nearly all legacy HSPA terminals with type 2 / 3 Receiver disable the equalizer when STTD is enabled. Seemingly this is a compromise in the design phase to save processing power. This problem remained unknown to date as STTD has never been used before.

The 3GPP classifies HSDPA mobile terminals into different categories according to their data transmission capability. This is illustrated in a table.

| **HS-DSCH category** | **Maximum number of HS-DSCH codes received** | **Minimum inter-TTI interval** | **Maximum number of bits of an HS-DSCH transport block received within an HS-DSCHTTI NOTE 1** | **Total number of soft channel bits** | **Supported modulations without MIMO operation** | **Supported modulations simultaneous with MIMO operation** | **Throughput** | |
|---|---|---|---|---|---|---|---|---|
| Category 1 | 5 | 3 | 7298 | 19200 | QPSK, 16QAM | Not applicable | 3,649 | |
| Category 2 | 5 | 3 | 7298 | 28800 | | (MIMO not supported) | 3,649 | |
| Category 3 | 5 | 2 | 7298 | 28800 | | | 3,649 | |
| Category 4 | 5 | 2 | 7298 | 38400 | | | 3,649 | |
| Category 5 | 5 | 1 | 7298 | 57600 | | | 3,649 | |
| Category 6 | 5 | 1 | 7298 | 67200 | | | 3,649 | |
| Category 7 | 10 | 1 | 14411 | 115200 | | | 7,2055 | |
| Category 8 | 10 | 1 | 14411 | 134400 | | | 7,2055 | |
| Category 9 | 15 | 1 | 20251 | 172800 | | | 10,1255 | |
| Category 10 | 15 | 1 | 27952 | 172800 | | | 13,976 | |
| Category 11 | 5 | 2 | 3630 | 14400 | QPSK | | 1,815 | |
| Category 12 | 5 | 1 | 3630 | 28800 | | | 1,815 | |
| Category 13 | 15 | 1 | 35280 | 259200 | QPSK, 16QAM, 64QAM | | 17,64 | |
| Category 14 | 15 | 1 | 42192 | 259200 | | | 21,096 | **MIMO** |
| Category 15 | 15 | 1 | 23370 | 345600 | QPSK, 16QAM | | 11,685 | 23,37 |
| Category 16 | 15 | 1 | 27952 | 345600 | | | 13,976 | 27,952 |
| Category 17 NOTE 2 | 15 | 1 | 35280 | 259200 | QPSK, 16QAM, 64QAM | - | 17,64 | |
| | | | 23370 | 345600 | - | QPSK, 16QAM | 11,685 | 23,37 |
| Category 18 NOTE 3 | 15 | 1 | 42192 | 259200 | QPSK, 16QAM, 64QAM | - | 21,096 | |
| | | | 27952 | 345600 | - | QPSK, 16QAM | 13,976 | 27,952 |

The problem is linked to the fact that Cat'7 and 8 UEs use a Type 2 (single Rx antenna and equalizer) or Type 3 (dual Rx antenna and equalizer) receiver in order to boost the DL peak rate in good radio conditions, but the utilization of STTD provokes that these Type 2 or Type 3 Receivers in the UE to perform as Type 0 or 1 (i.e. RAKE receiver or dual Rx antenna without equalizer), with an associated lower peak rate performance.

As mentioned before, due to the impact of STTD can be significant, as alternative the usage of a secondary CPICH (S-CPICH) instead of using STTD. is possible in order to provide diversity to MIMO.. In this regard, MIMO transmission over S-CPICH has the advantageous effect not to switch off the UE equalizer, but, at the same time, is problematical because it provokes a new non-orthogonal interference in the system. This interference may be tolerable or not depending on certain circumstances. Later, this important issue is discussed in more detail.

Owing to the fact that the performance characterizations are ongoing and may be different per each terminal, it is thus desirable the system to be adaptable. Therefore, a solution of this problem needs to deal with determination of which traffic and terminal types and in which moment of a call have to go to the carrier in which the S-CPICH is used. Also, it should support safe inter-frequency handovers (IF HO).

### Glossary:

It is well-known that abbreviations and acronyms are frequently used in the mobile telephony field. Below there is a list of acronyms/terms used throughout the present specification:
- 3GPP: The 3rd Generation Partnership Project
- CDMA: Code Division Multiple Access
- CQI: Channel Quality Indicator
- CPICH: Common Pilot Channel
- CLTD: Closed Loop Transmit Diversity
- DL: Downlink
- Ec/N0: Carrier signal power-to-noise Ratio
- HO: Handover
- HSDPA: High Speed Downlink Packet Access
- IE: Information Element
- MIMO: Multiple Input - Multiple Output
- PA: Power Amplifier
- P- CPICH: Primary CPICH
- RRC: Radio Resource Control
- RRM: Radio Resource Management
- RSCP: Received Signal Code Power
- S- CPICH: Secondary CPICH
- STTD: Space Time Transmit Diversity
- TSTD: Time Switched Transmit Diversity
- UE: User Equipment
- UMTS: Universal Mobile Telecommunications System
- UTRAN: UMTS Terrestrial Radio Access Network
- VAM: Virtual Antenna Mapping
- TTI: Time Transmission Interval

WO-2008/033089 concerns methods and arrangements for load balancing of power amplifiers. A transmit unit comprises at least two antennas and may use multi antenna transmit techniques, such as transmit diversity or MIMO. Transmissions may be made from one antenna, another antenna or both.

US-6,907,243 concerns dynamic soft handoff resource allocation in a wireless communications network. A wireless path characteristic is determined for each path of a macro diversity connection between a mobile device and a plurality of wireless sites. The wireless path characteristic includes a location-based characteristic, a congestion-based characteristic, a subscriber-based characteristic and/or a performance-based characteristic.

### Brief description of the drawings

The above and other objects and features of the invention will appear clearer with the following accompanying drawings, given as non-restrictive examples.

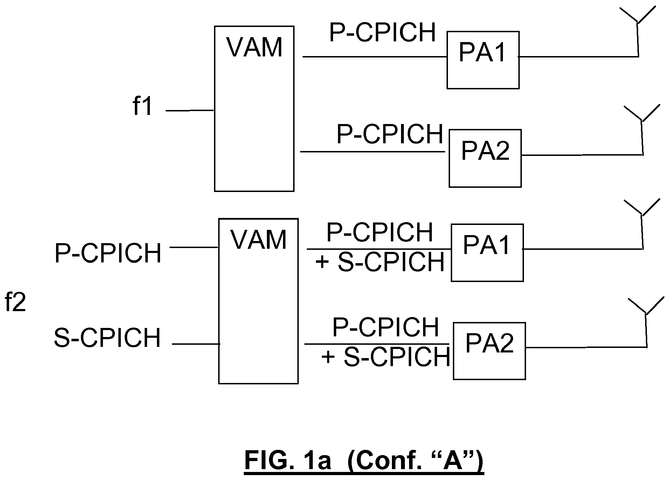

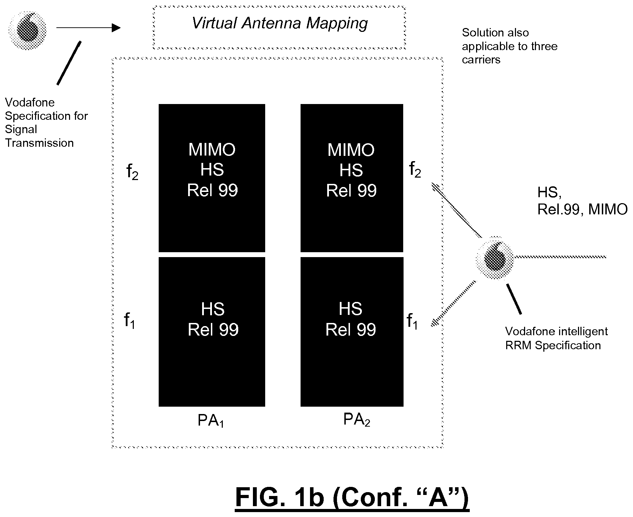

FIG. 1 a and 1 b show configuration "A" scheme. No STTD, S-CPICH and VAM.

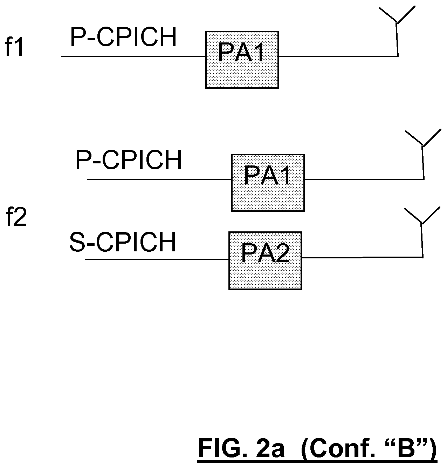

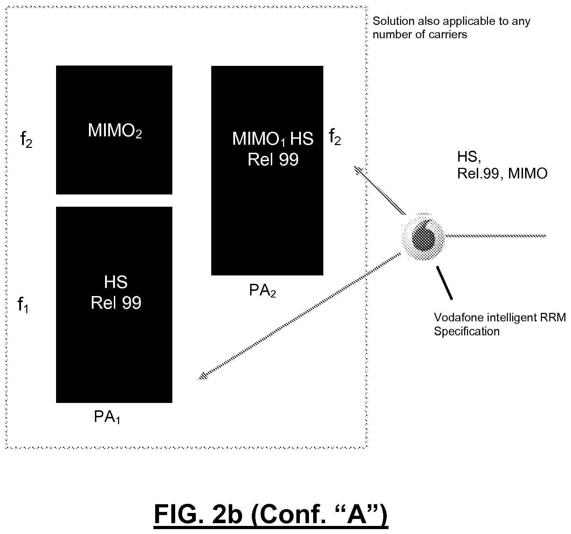

FIG. 2a and 2b show configuration "B" scheme. No STTD, S-CPICH and no-VAM.

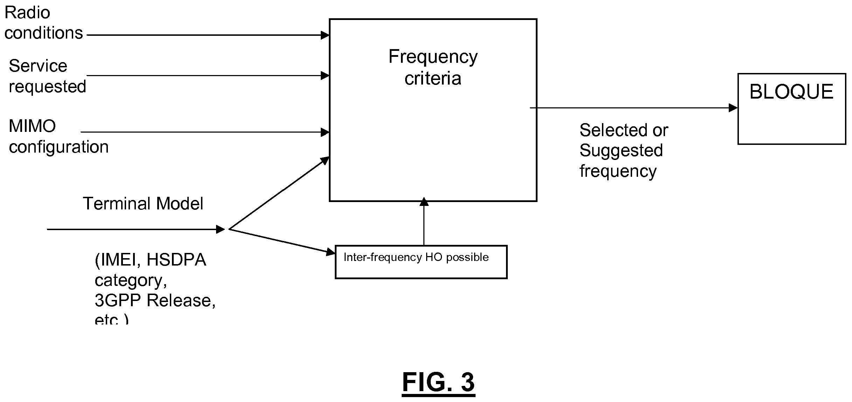

FIG. 3 Function according to an implementation of the proposed method.
FIG. 4 Flow chart

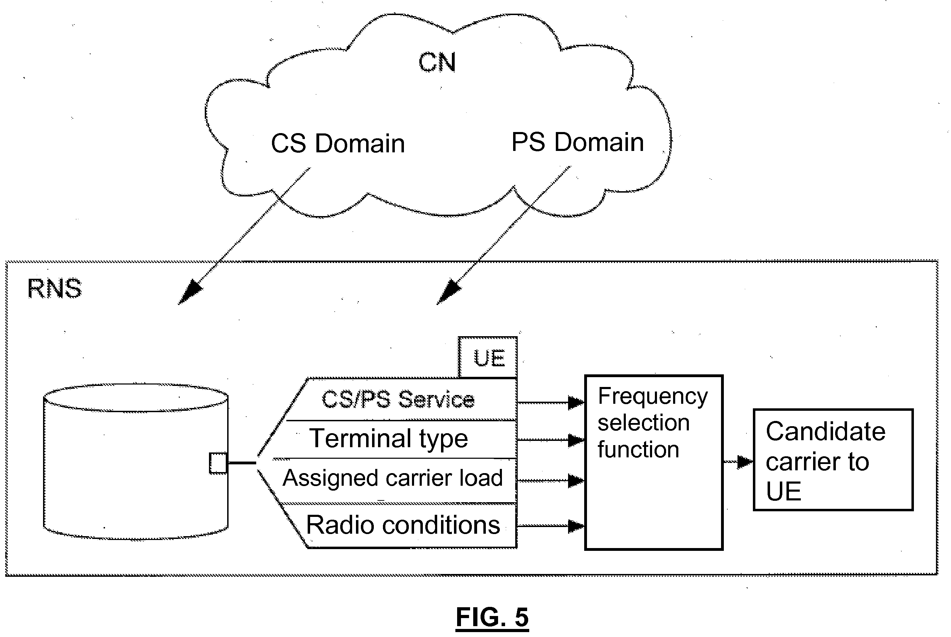

Fig. 5 is a functional block diagram showing an embodiment in accordance with the present invention.

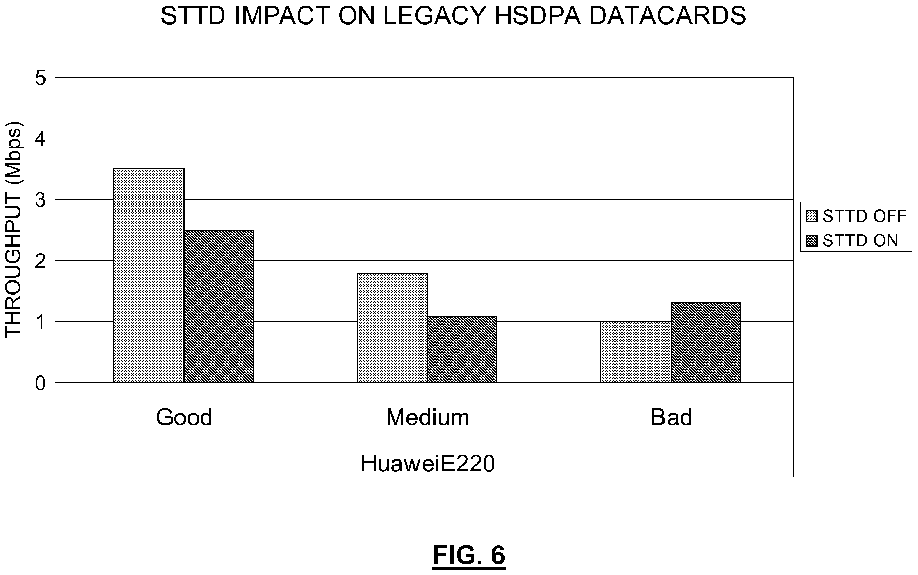

*Fig. 6* shows a diagram of STTD impact.

### Summary of the Invention

The present invention provides a method for dynamically allocating transmissions for a mobile terminal in a cellular telecommunications network as defined by claim 1 and a system for dynamically allocating transmissions for a mobile terminal in a cellular telecommunications network as defined in claim 11.

In view of the described situation, the present invention proposes a novel policy that overcomes the problems pointed out before and protects HSDPA performances for MIMO configurations using S-CPICH by distributing traffic according to certain conditions, principally network characteristics and terminal features.

As mentioned before, MIMO transmission needs the usage of two PAs transmitting in two independent channels and the availability of a diversity pilot (one per each PA). This can be provided by the usage of:
- STTD technique (Diversity CPICH) or
- S-CPICH (Secondary CPICH).

MIMO transmission also implies the need to balance the transmission power from the two PAs in order to maintain performance and improve efficiency. This can be done via:
- STTD as diversity technique.
- Usage of a Virtual Antenna Mapping, which is transparent to the legacy UEs.
- Limited inter-carrier load balancing. Balancing PAs using different carriers over them, this is a pseudo balancing by ad-hoc traffic management, as it is not possible to use exactly the same amount of power in 2 frequencies with different users. The basics for this is to check the Power used in every PA and allocate more users to the emptier PA.

In the next paragraphs, a solution to the problem of interference caused by S-CPICH in UEs is put forward considering that STTD is not used as a method of diversity in the network. This solution includes an allocation policy, which efficiently handles traffic load of UEs on the carriers estimating whether a given UE is a suitable candidate for being allocated to a S-CPICH carrier.

Under said circumstances, two different scenarios are discussed below, wherein the proposed solution by present invention is suitable. For simplicity, the cases consider two carriers. Yet the solution is also valid for more than two carriers.

### "A" Configuration scheme: Secondary pilot with VAM (carrier f1 and f2 in PA1 & PA2)

Considering a network scenario with just two carriers (noted as f1 and f2), assuming that MIMO is active in carrier f2, having P-CPICH on transmission branch 1 and S-CPICH on transmission branch 2; further assuming that non-MIMO users can be in carrier f1 or f2 and P-CPICH is only used for them, but MIMO is not used in the carrier f1.

Then, the balance transmission power policy uses a VAM function to distribute traffic allocated to f1 and f2 in both PA1 and PA2. Therefore both P-CPICH and S-CPICH are transmitted in both PAs but with different phases introduced by the VAM function.
This VAM function for balancing f1 and f2 transmission in both PA1 and PA2 is not an object of the present invention.

### "B" Configuration scheme: Secondary pilot without VAM (carrier f1 in PA1)

In a network scenario with just two carriers (f1, f2), assuming that MIMO is only active in carrier f2, having P-CPICH on PA2 and S-CPICH on PA1; further assuming that carrier f1 only uses PA1 and non- MIMO users can be setup in carrier f1 or f2 and so P-CPICH is only used for them.

To do an efficient use of the power amplifier 1, it is necessary the dynamic power allocation. In PA1 it is configured:
- In carrier with frequency 2: the S-CPICH and the second branch of MIMO transmission,
- In carrier with frequency 1: all the active channels (common channels, R99, HSPA).

Then, in order to use the power when one of the frequencies is not using it, it is needed to dynamically allocate it.

Transmission power of the two PAs is balanced by an intelligent RRM functionality (not part of this invention), although this power balancing is limited to Inter-carrier load balancing. The RRM is checking the amount of power used in every PA and then decisions are taken in order to put users in f1 carrier or f2 carrier depending on this power used.

The proposed solution defines a flexible traffic allocation policy, applicable to both sceneries, "A" and "B" configurations, wherein UEs are distributed according to their capabilities.. The solution aims to expose the non-MIMO terminals to interference derived from S-CPICH and from MIMO transmission only when their performances are not significantly impacted. Therefore a criterion is needed in order to define and estimate these levels and minimize this non-equalized interference. Basically, as S-CPICH is consuming some power, the categories 7 to 10 which are in good radio conditions which, therefore are capable to get the maximum bit rate possible, will be put into frequency 1 for saving power as SPICH requires some additional power. Yet the frequency 2 is also valid.

Firstly, it is identified that the impact of the interference may be different based on four main factors:
- The Radio conditions experienced by a specific UE on a specific moment in time. They are evaluated as a function of the CQI, Ec/N0 and RSCP and classified as Good, Medium or Bad.
- The possibility for the network to multiplex in Code (same TTI), MIMO transmission with non-MIMO transmission (network parameter).
- The network Configuration used (Configuration A, Configuration B or any other Configuration using MIMO in which at least 2 carriers are used).
- The model of terminal (e.g. max peak rate, active RX diversity etc.)

A particular object of this invention is to provide a special function for defining a traffic allocation policy. This function is implemented in the RNC, which obtains as an input data from NodesB at call set-up and periodically during the call gets:
- Dynamic parameter: Radio conditions experienced by a specific UE.
- Service requested (CS or PS).
- Fixed parameters: MIMO Network configuration.
- Fixed Parameters: Features of terminal.
Although the model is not currently available in the RNC, it is possible to identify sets or families of UEs to be matched with operator statistical information on the UE population available on the network.
The terminals can be thus classified on the basis of having common features, using Information Elements (IE) that are or could be made available at the RNC level, among them, they are the following: IMEI; Service Requested; HSDPA capable; HSDPA Category; 3GPP Release; With external power supplies or not (i.e. datacard or normal handset).
The function indicates how to allocate new UEs (also existing UEs) to carriers.

### Preferred Embodiment

A preferred embodiment for carrying out the present invention will now be described with reference to the accompanying drawings to explain the invention in more detail.

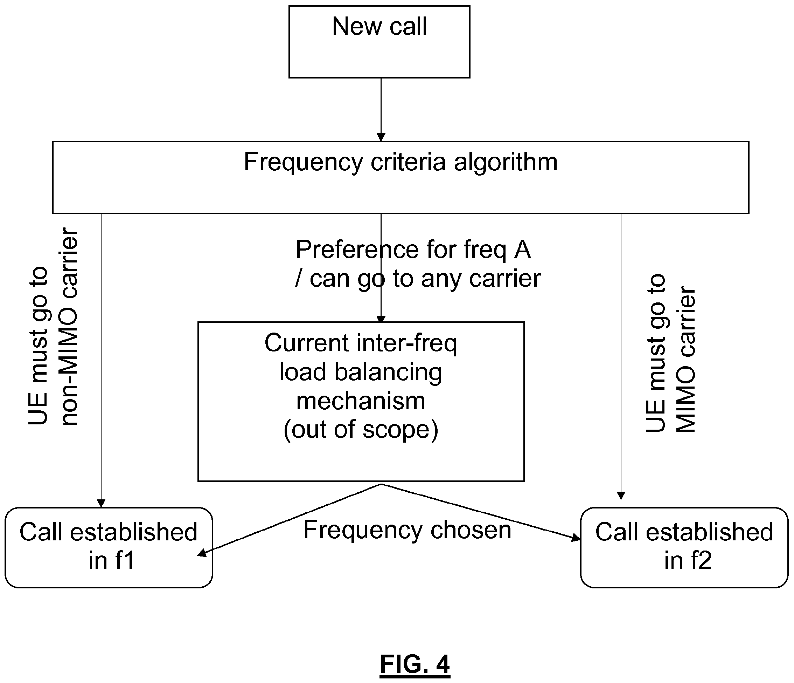

In a network scenario with two carriers, f1, f2, being f1 a carrier free of MIMO traffic and f2 a carrier using S-CPICH for diversity provision to MIMO traffic, Figure 4 shows a flow diagram of the steps followed when a UE arrives to the RNC with a call set-up (1). The RNC checks whether the UE is vulnerable to interference derived from S-CPICH and MIMO transmission. To this end, several parameters are checked; some of them are periodically revised since conditions may change. An example of these parameters is shown in a table below.

| Service Request | UE MIMO | UE HSPA category | UE 3GPP release | Radio Conditions | Datacard or handset |
|---|---|---|---|---|---|
| CS | Yes | NA | NA | NA | Handset |
| PS | No | 12 | 5 | Good | Datacard |
| PS | No | 8 | 6 | Good | Datacard |
| PS | Yes | 16 | 8 | Good | Datacard |
| ... | | | | | |

According to the information available in the table, which may be stored in a database for being used, the proposed function of the present invention provides with an output. This output is a number, which indicates the RNC which carrier to use for a particular UE. The number also establishes a priority on the basis of:
- UE can go to any carrier, then function value = 0;
- UE should preferably go to a non-MIMO carrier, then function value = 1;
- UE should preferably go to a MIMO carrier, then function value = 2;
- UE must go to a non-MIMO carrier, then function value = 3;
- UE must go to a MIMO carrier, then function value = 4;

For instance, if the service requested is CS, and the UE is a handset MIMO terminal, then the function output is "3", which means that the UE must go to a non-MIMO carrier and this result is valid regardless the radio condition. Therefore, for this particular UE is not necessary to take into account radio condition measuring and this measure can be avoided.

Another example, if the service requested is PS and the UE is a Datacard non-MIMO terminal with cat. 12 and rel.5, then the function output is "3" provided that radio condition are good.

It is clear that the function may be much more complicated by defining further criterion and assigning different weights according to the UE vulnerability and probabilities of being affected by future radio conditions. Similarly, radio conditions are defined as good/medium/bad in these examples but additional thresholds may be established. In this regard, also fuzzy logic may be applied for these variables and parameters.

In addition, at call set-up the support of Inter-frequency HO (handover) by the UE is also evaluated based on the available information of the Model of the terminal, and it is fed into any available Frequency Selection system in order to know if an inter-frequency HO is supported/possible and if a terminal can actually be moved from a carrier to another during the call in case the Radio Conditions change.

The function for defining a traffic allocation policy may be also represented as a table, matching inputs into desired outputs. This table may include among others the following data:

| Service Request | UE MIMO | UE HSPA category | UE 3GPP release | Radio Conditions | Datacard or handset | RX diversity | Output |
|---|---|---|---|---|---|---|---|
| CS | NA | NA | NA | NA | Handset | No | UE must go to a non-MIMO carrier |
| PS | No | 12 | 5 | Good | Datacard | No | Preference to MIMO carrier |
| PS | No | 8 | 6 | Good | Datacard | No | Must go to non-MIMO carrier |
| PS | No | 8 | 6 | Good | Datacard | Yes | Must go to MIMO carrier |
| PS | Yes | 16 | 8 | Good | Datacard | Yes | Must go to MIMO carrier |
| PS | No | 1-6 | 6 | Medium | Handset | No | Preference to MIMO carrier |

This information is gathered from different sources. The UE sends most of this information to the RNC directly (Service Request, UE HSPA category, UE MIMO or not, UE 3GPP release, Data card or handset) and for example the radio conditions are evaluated in the Nodes B.

The inputs of the above table may be stored in a database to be available for a system implementing the function. Thus, this database keeps information regarding the particularities of a given UE as well as the condition of the network in a particular moment. This database needs to be periodically updated and fed with new data in order to be used by the system.

Furthermore, not all the UE in a network support MIMO. This can be detected in first RRC connection request message with the Release information.

Since the RNC is aware of UE capabilities, radio conditions experienced UEs and the network configuration regarding MIMO and the load of traffic from the existing UEs on the carriers, it is thus possible to make a decision on assigning a carrier to this UE, even during a established call or a service (in the event that the UE supports inter-frequency handover).

On the whole, this approach permits an advantageous traffic allocation and power balancing between PAs, activating MIMO with S-CPICH and maintaining the performances of other UEs supports.

## Claims

1. A method for dynamically allocating transmissions for a mobile terminal in a cellular telecommunication network to one of a plurality of carriers, each at a respective different frequency, at least one of the carriers using Multiple-Input, Multiple-Output, MIMO, with a diversity transmission technique, the method comprising the steps of:
- evaluating conditions for radio reception by the mobile terminal;
- providing a measure of the load of the carriers in the cellular telecommunication network;
- obtaining information regarding a type of the mobile terminal;
- identifying whether a service requested by the mobile terminal from the cellular telecommunication network is a Packet Switched, PS service;
- allocating transmissions for the mobile terminal to a carrier of the at least one carrier using MIMO with diversity transmission technique, the allocation dependent upon a plurality of characteristics comprising the evaluated condition for radio reception, the provided measure of the load, the obtained information regarding a type and the identification of whether a PS service is requested.

2. The method according to claim 1, wherein the diversity transmission technique uses a Secondary-Common Pilot Channel, S-CPICH and wherein the step of allocating transmissions is based upon consideration of a vulnerability of the mobile terminal to interference provoked by the S-CPICH determined using the plurality of characteristics.

3. The method according to claim 1, wherein the diversity transmission technique uses Space-Time Transmit Diversity STTD and wherein the step of allocating is based upon the performance degradation of the mobile terminal associated with STTD determined using the plurality of characteristics.

4. The method according to any of claims 1 to 3, wherein the information of type of mobile terminal includes inter-frequency Hand Over, HO, capability of the mobile terminal in order to allow transmissions for the mobile terminal to be allocated to a different carrier during a call.

5. The method according to any of claims 1 to 4, wherein the conditions for radio reception are evaluated by means of at least one of the following parameters:
- Channel Quality Indicator, CQI;
- Carrier signal power-to-noise ratio, Ec/N0;
- Received Signal Code Power, RSCP.

6. The method according to any of claims 1 to 5, wherein the conditions for radio reception are evaluated at call set-up and periodically during the call.

7. The method according to any of claims 1 to 6, wherein the information regarding a type of mobile terminal includes at least one of the following parameters: International Mobile Equipment Identity, IMEI, Service Requested, High Speed Packet Downlink Access, HSDPA capability, HDSPA category, Third Generation Partnership Project, 3GPP release and external power supplies.

8. The method according to any of claims 1 to 7, further comprising evaluating mobile terminal vulnerability by matching the plurality of characteristics with a table having a predefined output for each possible combination of the plurality of characteristics.

9. The method according to any of claims 1 to 8, wherein the plurality of carriers are generated by a plurality of Power Amplifiers, each of which having a respective load, and wherein the load of the plurality of Power Amplifiers is balanced by means of a Virtual Antenna Mapping, VAM, function in order to distribute power across the plurality of Power Amplifiers.

10. The method according to any of claims 1 to 9, wherein the plurality of carriers are generated by a plurality of Power Amplifiers each of which having a respective load and wherein the load of the plurality of Power Amplifiers is balanced by a Radio Resource Management, RRM intelligent function.

11. A system for dynamically allocating transmissions for a mobile terminal in a cellular telecommunication network to one of a plurality of carriers, at a respective frequency, at least one of the carriers using Multiple-Input, Multiple-Output, MIMO, with a diversity transmission technique, the system comprising:
- means for evaluating conditions for radio reception by a mobile terminal;
- an interface unit for obtaining information regarding a type of the mobile terminal;
- means for identifying whether a service requested by the mobile terminal from the cellular telecommunication network is Packet Switched;
- means for measuring a load of the carriers;
- a database for storing the evaluated conditions for radio reception, the information obtained regarding the type of the mobile terminal, whether a service is Packet Switched, and the measured load of the carriers as inputs;
- a module in a RNC configured to allocate transmissions for the mobile terminal to a carrier of the at least one carrier using MIMO with diversity transmission technique on the basis of the said database.

12. The system according to claim 11, wherein the diversity technique uses a Secondary-Common Pilot Channel, S-CPICH and the interface unit is configured to obtain information regarding the vulnerability of the mobile terminal to interference provoked by the S-CPICH, the system being further arranged to store said information in the database.

13. The system according to claim 11, wherein the diversity technique used is Space-Time Transmit Diversity, STTD and the interface unit is further configured to obtain information regarding the performance degradation of the mobile terminal associated with STTD, the system being further arranged to store said information in the database.

## Patentansprüche

1. Verfahren zur dynamischen Zuweisung von Übertragungen für ein mobiles Endgerät in einem zellularen Telekommunikationsnetzwerk an einen einer Vielzahl von Trägern, jeweils mit einer jeweiligen verschiedenen Frequenz, wobei mindestens einer der Träger "Multiple-Input", "Multiple-Output", MIMO, mit einer Diversity-Übertragungstechnik verwendet, wobei das Verfahren folgende Schritte umfasst:
- Auswertung von Bedingungen für Funkempfang durch das mobile Endgerät;
- Bereitstellen eines Maßes der Belastung der Träger im zellularen Telekommunikationsnetzwerk;
- Erlangen von Information bezüglich eines Typs des mobilen Endgeräts;
- Identifizieren, ob ein durch das mobile Endgerät vom zellularen Telekommunikationsnetzwerk angeforderter Dienst ein paketvermittelter Dienst, PS-Dienst ist;
- Zuweisung von Übertragungen für das mobile Endgerät an einen Träger des mindestens einen Trägers, der MIMO mit Diversity-Übertragungstechnik verwendet, wobei die Zuweisung von einer Vielzahl von Kennlinien abhängt, welche die ausgewertete Bedingung für Funkempfang, das bereitgestellte Maß der Belastung, die erlangte Information bezüglich eines Typs und die Identifikation umfassen, ob ein PS-Dienst angefordert ist.

2. Verfahren nach Anspruch 1, wobei die Diversity-Übertragungstechnik einen "Secondary-Common Pilot Channel", S-CPICH, verwendet, und wobei der Schritt der Zuweisung von Übertragungen auf der Berücksichtigung einer Anfälligkeit des mobilen Endgeräts gegen Störung basiert, die durch den S-CPICH provoziert wird, die unter Verwendung der Vielzahl von Kennlinien ermittelt wird.

3. Verfahren nach Anspruch 1, wobei die Diversity-Übertragungstechnik "Space-Time Transmit Diversity", STTD, verwendet, und wobei der Schritt der Zuweisung auf der Performance-Degradierung des mobilen Endgeräts beruht, assoziiert mit STTD, die unter Verwendung der Vielzahl von Kennlinien ermittelt wird.

4. Verfahren nach einem der Ansprüche 1 bis 3, wobei die Information des Typs von mobilem Endgerät Zwischenfrequenz-Weiterreichen/"inter-frequency Hand Over", HO, Fähigkeit des mobilen Endgeräts einschießt, um zu erlauben, dass Übertragungen für das mobile Endgerät, während eines Anrufs, einem verschiedenen Träger zugewiesen werden.

5. Verfahren nach einem der Ansprüche 1 bis 4, wobei die Bedingungen für Funkempfang mithilfe mindestens einem der folgenden Parameter ausgewertet werden:
- Kanalqualitätsindikator/Chanel Quality Indicator, CQI;
- Verhältnis Trägersignalenergie-zu-Rauschen, Ec/NO;
- Empfangsssignal-Code-Energie/Received Signal Code Power, RSCP.

6. Verfahren nach einem der Ansprüche 1 bis 5, wobei die Bedingungen für Funkempfang beim Verbindungsaufbau und periodisch während des Anrufs ausgewertet werden.

7. Verfahren nach einem der Ansprüche 1 bis 6, wobei die Information bezüglich eines Typs des mobilen Endgeräts mindestens einen der folgenden Parameter einschließt: "International Mobile Equipment Identity", IMEI, angeforderter Dienst, "High Speed Packet Downlink Access", HSDPA-Fähigkeit, HDSPA-Kategorie, "Third Generation Partnership Project", 3GPP-Ausgabe und externe Stromversorgungen.

8. Verfahren nach einem der Ansprüche 1 bis 7, das ferner die Auswertung der Anfälligkeit des mobilen Endgeräts durch Anpassen der Vielzahl von Kennlinien mit einer Tabelle umfasst, die eine vordefinierte Ausgabe für jede mögliche Kombination der Vielzahl von Kennlinien aufweist.

9. Verfahren nach einem der Ansprüche 1 bis 8, wobei die Vielzahl von Trägern durch eine Vielzahl von Leistungsverstärkern erzeugt wird, wovon jeder eine jeweilige Belastung aufweist, und wobei die Belastung der Vielzahl von Leistungsverstärkern mittels einer virtuellen Antennen-Mapping-Funktion, VAM-Funktion, ausgeglichen wird, um den Strom über die Vielzahl von Leistungsverstärkern zu verteilen.

10. Verfahren nach einem der Ansprüche 1 bis 9, wobei die Vielzahl von Trägern durch eine Vielzahl von Leistungsverstärkern erzeugt wird, wovon jeder eine jeweilige Belastung aufweist, und wobei die Belastung der Vielzahl von Leistungsverstärkern durch eine intelligente "Radio Resource Management", RRM-Funktion ausgeglichen wird.

11. System zur dynamischen Zuweisung von Übertragungen für ein mobiles Endgerät in einem zellularen Telekommunikationsnetzwerk an einen einer Vielzahl von Trägern, mit einer jeweiligen Frequenz, wobei mindestens einer der Träger "Multiple-Input", "Multiple-Output", MIMO, mit einer Diversity-Übertragungstechnik verwendet, wobei das System umfasst:
- Mittel zur Auswertung von Bedingungen für Funkempfang durch ein mobiles Endgerät;
- eine Schnittstelleneinheit zum Erlangen von Information bezüglich eines Typs des mobilen Endgeräts;
- Mittel zum Identifizieren, ob ein durch das mobile Endgerät vom zellularen Telekommunikationsnetzwerk angeforderter Dienst ein paketvermittelt ist;
- Mittel zum Messen einer Belastung der Träger;
- eine Datenbank zum Speichern der ausgewerteten Bedingungen für Funkempfang, der Information, die bezüglich des Typs des mobilen Endgeräts erlangt wurde, ob ein Dienst paketvermittelt ist, und der gemessenen Belastung der Träger als Eingaben;
- ein Modul in einer Funknetzsteuerung (RNC), das konfiguriert ist, Übertragungen für ein mobiles Endgerät einem Träger des mindestens einen Trägers, der MIMO mit Diversity -Übertragung verwendet, auf der Datenbank basierend zuzuweisen.

12. System nach Anspruch 11, wobei die Diversity-Technik einen "Secondary-Common Pilot Channel", S-CPICH verwendet und die Schnittstelleneinheit konfiguriert ist, Information bezüglich der Anfälligkeit des mobilen Endgeräts gegen Störung zu erlangen, die vom S-CPICH provoziert wurde, wobei das System ferner eingerichtet ist, die Information in der Datenbank zu speichern.

13. System nach Anspruch 11, wobei die verwendete Diversity-Technik "Space-Time Transmit Diversity", STTD, ist und die Schnittstelleneinheit ferner konfiguriert ist, Information bezüglich der Performance-Degradierung des mit STTD assoziierten mobilen Endgeräts zu erlangen, wobei das System ferner eingerichtet ist, die Information in der Datenbank zu speichern.

## Revendications

1. Procédé d'allocation dynamique de transmissions d'un terminal mobile dans un réseau de télécommunication cellulaire à l'une d'une pluralité de porteuses, chacune à une fréquence différente respective, au moins l'une des porteuses utilisant le mode à entrées multiples, sorties multiples, MIMO, avec une technique de transmission en diversité, le procédé comprenant les étapes consistant à :
- évaluer les conditions de réception radio par le terminal mobile ;
- fournir une mesure de la charge des porteuses dans le réseau de télécommunication cellulaire ;
- obtenir des informations concernant un type du terminal mobile ;
- identifier qu'un service demandé par le terminal mobile au réseau de télécommunication cellulaire est ou non un service à commutation par paquets, PS ;
- allouer les transmissions du terminal mobile à une porteuse de l'au moins une porteuse utilisant le mode MIMO avec une technique de transmission en diversité, l'allocation dépendant d'une pluralité de caractéristiques dont la condition évaluée de la réception radio, la mesure fournie de la charge, les informations obtenues concernant un type et l'identification qu'un service PS est demandé ou non.

2. Procédé selon la revendication 1, dans lequel la technique de transmission en diversité utilise un canal pilote secondaire commun, S-CPICH et dans lequel l'étape d'allocation des transmissions repose sur la considération d'une vulnérabilité du terminal mobile à un brouillage causé par le S-CPICH déterminée au moyen de la pluralité de caractéristiques.

3. Procédé selon la revendication 1, dans lequel la technique de transmission en diversité utilise la diversité de transmission dans l'espace-temps STTD et dans lequel l'étape d'allocation repose sur la dégradation de la performance du terminal mobile associé à la STTD déterminée au moyen de la pluralité de caractéristiques.

4. Procédé selon l'une quelconque des revendications 1 à 3, dans lequel les informations de type du terminal mobile comportent la capabilité de transfert, HO, inter-fréquences du terminal mobile afin de permettre l'allocation des transmissions du terminal mobile à une porteuse différente durant un appel.

5. Procédé selon l'une quelconque des revendications 1 à 4, dans lequel les conditions de réception radio sont évaluées au moyen d'au moins l'un des paramètres suivants :
- l'indicateur de qualité de canal, CQI ;
- le rapport puissance de signal porteur/bruit, Ec/NO ;
- la puissance de code de signal reçu, RSCP.

6. Procédé selon l'une quelconque des revendications 1 à 5, dans lequel les conditions de réception radio sont évaluées à l'établissement d'un appel et périodiquement durant l'appel.

7. Procédé selon l'une quelconque des revendications 1 à 6, dans lequel les informations concernant un type du terminal mobile comportent au moins l'un des paramètres suivants : identité internationale d'équipement mobile, IMEI, service demandé, capabilité d'accès de liaison descendante pour paquets à haut débit, HSDPA, catégorie HDSPA, version 3GPP (Third Generation Partnership Project), et alimentations électriques externes.

8. Procédé selon l'une quelconque des revendications 1 à 7, comprenant en outre l'évaluation de la vulnérabilité du terminal mobile en comparant la pluralité de caractéristiques à une table produisant un résultat prédéfini pour chaque combinaison possible de la pluralité de caractéristiques.

9. Procédé selon l'une quelconque des revendications 1 à 8, dans lequel la pluralité de porteuses est générée par une pluralité d'amplificateurs de puissance, chacun ayant une charge respective, et dans lequel la charge de la pluralité d'amplificateurs de puissance est équilibrée au moyen d'une fonction de mappage d'antenne virtuelle, VAM, afin de répartir la puissance parmi la pluralité d'amplificateurs de puissance.

10. Procédé selon l'une quelconque des revendications 1 à 9, dans lequel la pluralité de porteuses est générée par une pluralité d'amplificateurs de puissance ayant chacun une charge respective et dans lequel la charge de la pluralité d'amplificateurs de puissance est équilibrée par une fonction intelligente de gestion de ressources radio, RRM.

11. Système d'allocation dynamique de transmissions d'un terminal mobile dans un réseau de télécommunication cellulaire à l'une d'une pluralité de porteuses, à une fréquence respective, au moins l'une des porteuses utilisant le mode à entrées multiples, sorties multiples, MIMO, avec une technique de transmission en diversité, le système comprenant :
- un moyen d'évaluation des conditions de réception radio par un terminal mobile ;
- une unité d'interface pour obtenir des informations concernant un type du terminal mobile ;
- un moyen d'identification qu'un service demandé par le terminal mobile au réseau de télécommunication cellulaire est ou non un service à commutation par paquets ;
- un moyen de mesure d'une charge des porteuses ;
- une base de données pour stocker les conditions évaluées de réception radio, les informations obtenues concernant le type du terminal mobile, qu'un service est à commutation par paquets ou non, et la charge mesurée des porteuses comme entrées ;
- un module dans un RNC configuré pour allouer les transmissions du terminal mobile à une porteuse de l'au moins une porteuse utilisant le mode MIMO avec une technique de transmission en diversité en fonction de ladite base de données.

12. Système selon la revendication 11, dans lequel la technique en diversité utilise un canal pilote secondaire commun, S-CPICH et l'unité d'interface est configurée pour obtenir des informations concernant la vulnérabilité du terminal mobile à un brouillage causé par le S-CPICH, le système étant agencé en outre pour stocker lesdites informations dans la base de données.

13. Système selon la revendication 11, dans lequel la technique en diversité utilisée est la diversité de transmission dans l'espace-temps STTD et l'unité d'interface est configurée en outre pour obtenir des informations concernant la dégradation de la performance du terminal mobile associé à la STTD, le système étant agencé en outre pour stocker lesdites informations dans la base de données.
